(19) 

Europäisches Patentamt
European Patent Office
Office européen des brevets

(11) **EP 2 260 690 A2**

(12) **EUROPÄISCHE PATENTANMELDUNG**

(43) Veröffentlichungstag:
**15.12.2010 Patentblatt 2010/50**

(51) Int Cl.:
*A01D 34/00* *(2006.01)*  *G05D 1/02* *(2006.01)*

(21) Anmeldenummer: **09001899.5**

(22) Anmeldetag: **11.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **15.02.2008 DE 102008009208**

(27) Früher eingereichte Anmeldung:
**15.02.2008 DE 102008009208**

(71) Anmelder: **Arnold, Gunter**
**22045 Hamburg (DE)**

(72) Erfinder: **Arnold, Gunter**
**22045 Hamburg (DE)**

Bemerkungen:
Die Patentansprüche 16-31. gelten als fallen gelassen, da die entsprechenden Anspruchsgebühren nicht entrichtet wurden (R. 45 (3) EPÜ).

(54) **Navigationssystem für einen autonomen mobilen Roboter, insbesondere Rasenmähroboter**

(57) Die Erfindung betrifft ein Navigationssystem für einen autonomen mobilen Roboter (3), ausgestattet mit einem dem Roboter zugeordneten Abfragegerät und mit mindestens einem räumlich getrennten feststehenden Transponder (1), welches sowohl Ultraschall-Sende als auch Empfangseinheiten aufweist und eine auf dem Ultraschalllaufzeitmessprinzip basierende bidirektionale nahezu windunabhängige Abstandsmessung für die Bildung einer Eingangsgröße für die Steuerungseinheit des Roboters durchführt. Durch die akustische radiale Abstandsbestimmung zu dem jeweils einen Transponder wird die Bodenfläche (10) um diesen herum kreisbogenförmig befahren. Durch Ausbringen weiterer identischer Transponder und der speziellen Fahrstrategie des mobilen Roboters wird ein einfach erweiterbares Navigationssystem realisiert.

**Fig.1**

EP 2 260 690 A2

**Beschreibung**

Die Erfindung betrifft ein Navigationssystem gemäß dem Oberbegriff des Anspruchs 1.

Verfahren zur Positionsbestimmung mit Ultraschall und Infrarotlicht bzw. Radiowellen für autonom fahrende Geräte, wie selbstfahrende Flächenreinigungsgeräte in haushaltstypischer Umgebung, vorzugsweise Saugroboter, Feuchtreinigungsroboter, Wischroboter, Polierroboter oder Fenster- bzw. Fliesenreinigungsroboter sind bekannt. Derartige Flächenreinigungsgeräte für den Innenbereich werden insbesondere in Verbindung mit fest stehenden Basisstationen verwendet. Die selbstfahrenden Flächenreinigungsgeräte fahren die fest stehende Basisstation selbsttätig an um beispielsweise die elektrischen Batterien bzw. Akkumulatoren aufzuladen oder um eingesammelten Staub abzuladen.

Aus EP 753 160 A1 sind ein mobiler Roboter und ein Verfahren zur Positionsbestimmung bekannt. Bei dem dortigen Verfahren ist eine Anzahl von Transpondern vorgesehen, die dem autonomen Roboter zur Orientierung dienen. Die Orientierung des Roboters erfolgt auf Basis einer Abstandsmessung des Roboters zu den Transpondern. Dabei ist der Zeitraum für einen Ultraschallimpuls, um sich von einem Ultraschallsender des Roboters bis zu einem Transponder auszubreiten, ein Maß für die Entfernung des Roboters zu dem Transponder. Nach Erhalt des Ultraschallsignals bestätigt der Transponder den Erhalt des Ultraschallimpulses, indem er einen Lichtimpuls oder einen Radiowellenimpuls zu dem Roboter zurücksendet. Aus der Zeit zwischen dem Aussenden des Ultraschallimpulses bis zum Erhalt des Lichtimpulses bzw. des Radiowellenimpulses wird der Abstand zwischen Roboter und Transponder abgeleitet.

In der DE102004014281A1 wird ein Flächenbearbeitungssystem für die haushaltstypische Umgebung beschrieben. Es wird ein Zeitgeber zur Durchführung der Laufzeitmessung durch das vom Lichtsignal-Empfänger empfangene Lichtsignal ausgelöst und durch das vom Schallsignal-Empfänger empfangene Schallsignal angehalten und der auf Grundlage der gemessenen Laufzeit bestimmte Abstand von Mobilteil zu Basisteil eine Eingangsgröße gebildet, welches einer Steuerungseinheit für die Antriebsmittel des Mobilteils zuführbar ist.

In der EP085879A2 ,EP0485879A2,US4751689, Fr2692363 und US 4313183 werden Verfahren zur Ortung von Fahrzeugen bzw. Messeinrichtungen zwischen Basisstationen und Transpondern beschrieben. Hier werden jeweils elektromagnetische Start oder Stoppsignale in Verbindung mit Ultraschall zur Laufzeitberechnung eingesetzt.

Es hat sich gezeigt, dass Messeinrichtungen zur Positionsbestimmung die Laufzeitberechnungen des Ultraschalls in Kombination mit elektromagnetischen Wellen nutzen, im Außenbereich zu großen Ungenauigkeiten führen. Luftbewegungen, die gegen die Ausbreitungsrichtung des Ultraschallimpulses verlaufen verlängern den Luftweg und damit die Laufzeit zwischen Sender und Empfänger. Luftbewegungen, die mit der Ausbreitungsrichtung des Ultraschallimpulses verlaufen verkürzen diese. Luftbewegungen die senkrecht auf die Ausbreitungsrichtung treffen, verursachen einen entsprechenden vektoriellen Driftwert und damit eine geringe Laufzeitverlängerung die im Vergleich zur Längsrichtung vernachlässigbar klein ist und die Messgenauigkeit des Navigationssystems praktisch nicht beeinträchtigt.

Bezeichnenderweise sind Geräte zur Messung der Windgeschwindigkeit (Anemometer) über Laufzeitveränderungen des Ultraschalls bei bekannten definierten Entfernungen mit Ultraschallsendern und Empfängern ausgeführt. Die Windgeschwindigkeit ist proportional der vom Sollwert abweichenden gemessenen Laufzeit.

Laufzeitmessungen zur Positionsbestimmung werden logischerweise mit unbekannter Entfernung zwischen Ultraschallsender und -Empfänger durchgeführt. Diese Messmethode ist im Außenbereich wegen der dort herrschenden Luftbewegungen daher mit einer hohen Fehlerquote behaftet. Die Fehlerquotenzunahme beträgt ca.1% pro 3m Zunahme der Windgeschwindigkeit. Bei Windstärke 5 Beaufort, das entspricht einer Windgeschwindigkeit von ca. 10 m pro Sekunde, ist mit einer Abweichung von ca. 30 cm auf 10 Meter Distanz zu rechnen. Dieses ist für eine sichere Navigation in gartenähnlichem Areal eine nicht zu akzeptierende Abweichung.

Die Windgeschwindigkeit bei unterschiedlichen Windstärken lässt sich aus folgenden Formeln berechnen:

$$c\left(\frac{d}{c+v}\right)$$

$$c\left(\frac{d}{c-v}\right)$$

**c** = Schallgeschwindigkeit bei 0 Grad Lufttemperatur

**d** = aktuelle Entfernung

**v** = Windgeschwindigkeit

Beispiel:

bei 10 m Entfernung und 10m Windgeschwindigkeit

mit der Windrichtung:

$$331{,}45\left(\frac{10}{331{,}45 + 10}\right) = 9{,}71 \ m/s$$

gegen die Windrichtung:

$$331{,}45\left(\frac{10}{331{,}45 - 10}\right) = 10{,}31 \ m/s$$

Ergebnis nach bidirektionaler Messung und Mittelung:

$$\frac{9{,}71 + 10{,}31}{2} = 10{,}01 \ m/s$$

Es resultiert ein Fehler von ca. 0,1 % und ist für dieses Navigationssystem unerheblich.

Ein nahezu windunabhängiges Navigationssystem ist in der US 2003/0142587 A beschrieben. Es wird über ein Zwei-Wege Ultraschalllaufzeitmessverfahren und mindesten zwei codierter Echo-Reflex-Baken eine Positionsbestimmung vorgestellt. Durch die permanent nötige Identifizierung und Zuordnung der einzelnen Baken und der daraus resultierenden aufwendigen Hard- wie Software erscheint dieses System für eine kostengünstige Lösung nicht geeignet. Eine Fahrstrategie die auf diesem Navigationsprinzip beruht ist nicht beschrieben.

Aufgabe der Erfindung ist es, ein zuverlässiges Navigationssystem für einen mobilen Roboter zu realisieren, welches nahezu unabhängig von Luftbewegungen eine sichere Navigation gewährleistet und trotzdem einfach einzurichten und dabei kostengünstig und problemlos erweiterbar ist Es soll eine einfache technische Lösung angeboten werden, die eine sinnvolle Bahnsteuerung für die Navigation des autonom fahrenden Roboters vorwiegend in außerhäuslicher Umgebung, insbesondere in gartenähnlichem Areal ermöglicht.

Diese Aufgabe wird bei einem gattungsgemäßen Navigationssystem erfindungsgemäß dadurch gelöst, das eine Entfernungs- bzw. Positionsbestimmung nach dem Ultraschallimpulslaufzeitmessprinzip bestehend aus einem an dem Roboter platzierten Abfragegerät und einem von diesem räumlich getrennten Transponder bidirektional verläuft (aktives Impuls-Echo-Laufzeit-Verfahren).

Eine Vorrichtung dieser Art, ausgeführt zum Messen von Entfernungen ist Stand der Technik und wird in der DE3442686C2 beschrieben.

In einer bevorzugten Grundfunktion des erfindungsgemäßen Navigationssystems sind ein Schallsignal-Sender und ein Schallsignal-Empfänger an dem Abfragegerät des Roboters und die zugeordneten Schallsignal-Empfänger und Schallsignal-Sender am Transponder vorgesehen. Dabei sendet das Abfragegerät ein erstes Ultraschallsignal aus, das sich mit Schallgeschwindigkeit ausbreitet. Dieses Signal wird vom Transponder empfangen und als aktives Echo dem Abfragegerät zurückgesendet. Zwischen Empfang des Ultraschallsignals und dem aktiven Echo des Transponders ist ein Schutzintervall vorgesehen, um vagabundierende passive Echosignale abklingen zu lassen. Der Zeitraum zwischen Senden des Ultraschallsignals vom Abfragegerät und Empfang des vom Transponder aktiv reflektierten Echos, abzüglich des Schutzintervalls, entspricht der Laufzeit des Ultraschallimpulses bidirektional und ist proportional der doppelten Entfernung zwischen Abfragegerät und Transponder. Hieraus kann die Entfernung zwischen Roboter und Transponder berechnet werden, wobei das Ergebnis nahezu unabhängig von Windrichtung und Windstärke ist.

In einer Grundausführung werden durch die permanent erfolgenden Abstandsmessungen des Roboters zu dem einen Transponder kreisbogenförmige Bahnen um diesen herum generiert, die bei nicht existierenden Begrenzungen oder Hindernissen einen Kreisbogen auf bis zu 360 Grad aufspannen und spiralbogenförmig vom Roboter befahren werden können. Da derartige Garteneigenschaften in der Praxis kaum vorkommen und sich hieraus keine systematische Bahnplanung in den Randgebieten des Navigationsareal entwickeln lässt, ist der Transponder vorteilhafterweise im Randgebiet des Areals platziert.

In dieser bevorzugten Grundausführung wird der zu befahrende Navigationsbereich durch die Ultraschallsendekeule des Transponders und durch die äußeren Begrenzungen des Areals vorgegeben. Eine systematische Befahrung der vom Transponder abgedeckten Ultraschallkeule in Kreisbogenbahnen erfolgt über zu oder abnehmende Radien, die als Sollwerte aus der Steuereinheit des Roboters abgerufen werden. Gemäß der Fahrstrategie, werden sie während der durch Begrenzungen oder Hindernissen initialisierten Fahrtrichtungswechsel aktualisiert. Die Reichweite beträgt je nach Witterung zwischen 30 und 40 Meter, bei einer Messabweichung. von ca 0,2 %. Der Transponder kann ebenerdig oder auch erhöht an z.B. Hauswand, Baum , Mast oder ähnl. installiert sein.

Für die Erhöhung der Reichweite oder um auch in Schattenbereichen des einen Transponders navigieren zu können, kann das Arbeitsgebiet mit mindestens einem Transponder erweitert werden. Durch die tangentiale Ausrichtung des Roboters entsteht eine Richtcharakteristik die nur den jeweiligen Transponder anspricht, um den der Roboter aktuell seine durch den Radius definierten Kreisbahnen befährt. Gelangt der Roboter durch zunehmenden Radius zur Reichweitengrenze des ersten Transponders A, wird ein zweiter entsprechend in der Ultraschallkeule des Roboters aufgestellter Transponder B angesprochen und antwortet nun ebenfalls auf das Ultraschallsignal des Roboters. Das Abfragegerät nutzt nur den im definierten Messintervall zuerst eintreffenden Ultraschallechoburst, in diesem Fall von dem sich näher am Roboter befindenden Transponder B. Die daraufhin neu erkannte und von der Steuereinheit des Roboters abgespeicherte Entfernung zum Transponder B wird als neuer Sollwert für den Radius vorgegeben mit dem der Roboter Fahrten auf Kreisbahnen um diesen Transponder B herum einleitet.

Da die Schallkeule des Roboters folglich auf den Transponder B gerichtet ist, wird Transponder A nicht mehr angesprochen. In dem Bereich der Kreisbahn, in der die Transponder und der Roboter sich in einer Linie befinden, wird bei zunehmendem Radius die Entfernung zum Transponder A weiter vergrößert und dieser bei einem definierten Minimum des empfangenen Ultraschallsignalpegels nicht mehr erreicht. Er deaktiviert sich, bzw. geht über in den Stromsparmodus.

Für die entgegengesetzte Abarbeitung des Navigationsgebietes, z.B. nach Erreichen der Grundstücksgrenze bei daraufhin wieder abnehmendem Radius, wird bei zwei eintreffenden Ultraschallechobursts innerhalb des definierten Messintervalls der zuerst eintreffende Burst verworfen und nur der zweite für die Navigation verwertet. Es wird also der weiter entfernte Transponder A mit dem neu berechneten Radius und damit dem neu definierten Sollwert in Kreisbogenabschnitten umfahren. Nach wenigen mit abnehmendem Radius gefahrenen Bahnen verschwindet Transponder B aus der Ultraschallsendekeule des Roboters und deaktiviert sich, bzw. geht in den Stromsparmodus über. Der Roboter fährt bei weiterhin abnehmendem Radius auf dem vorgegebenen Kreisbogenabschnitt zu seinem Ausgangspunkt Richtung Transponder A zurück. Es können beliebig viele Transponder für die Erweiterung des Areals zur Navigation aufgestellt werden, an denen sich der Roboter akustisch autonom ankoppelt.

Für eine systematische Abarbeitung und um eine unnötige Mehrfachbefahrung der Rasenfläche zu vermeiden können Ultraschallsender und Empfänger der Transponder und des Abfragegerätes mit verschiedenen Variationen der Richtcharakteristik ausgestattet sein. Die Eingrenzungen der Ultraschallkeulen kann durch eine Vielzahl unterschiedlich ausgerichteter Ultraschalikapseln, spezieller Ultraschallwandler, vorgesetzten verstellbaren Schallblenden, Schalltrichter oder Schalllinsen realisiert sein. Hierdurch können Überlappungen der von den Transpondern ausgehenden Ultraschallsendekeulen begrenzt werden. Überlappungen um eine definierte Länge, sind für die Differenzierung zwischen begrenzten Abschattungen durch Hindernisse, wie Bäume und Büsche oder beabsichtigten Ultraschallausblendungen wie der Eingrenzung der Ultraschallkeulen zur Unterstützung der Fahrstrategie vorgesehen. Es kann die Fahrstrategie an unterschiedliche Grundstücksformen angepasst werden

Alternativ können die Werte des integrierten Kompasses für die Eingrenzung der Ultraschallkeulen genutzt werden. Durch die permanente tangentiale Ausrichtung des Roboters zum Transponder generiert jeder Kreisbogenabschnitt einen individuellen Kompasswert der eine Positionsbestimmung unter Berücksichtigung der Werte des Radius ermöglicht. So können die Eigenschaften jeder Kreisbahn, wie z.B. Positionen von Hindernissen und ihren Abschattungen oder auch gedachte Wendemarken individuell abgespeichert werden. Über diese Eigenschaften ist auch eine Zuordnung zum jeweiligen Transponder möglich. Bei großem Radius und damit geringer Bahnkrümmung verringert sich die Auflösung der Kompassdaten. Hierdurch kann es zu Ungenauigkeiten bei der Positionsbestimmung kommen und sollte durch Odometriemessungen unterstützt werden.

Bei dieser vorgezogenen kostengünstigen Ausführung können die Transponder identisch sein. Lediglich die manuell einzustellende Richtcharakteristik unterscheidet sie. Dieses kann im einfachsten Fall durch ein horizontales Verdrehen der Transpondereinheit während der Installation durchgeführt werden. Es werden keine unterschiedlichen Trägerfrequenzen, Codierungen oder dergl. für die Identifizierung benötigt. Die spezielle Fahrstrategie und die Differenzierung der Reihenfolge der eingehenden Ultraschallechobursts koppeln den Roboter autonom an die aufeinander folgenden Transponder.

Alternativ sind bei entsprechend großem Navigationsareal zwei identische Transponder auf sich gegenüberliegenden Grundstücksbegrenzungen ausgebracht, wobei ihre Ultraschallsendekeulen aufeinander gerichtet sind. Um eine gegenseitige Beeinflussung zu vermeiden, muss die Distanz zwischen ihnen ausreichend groß sein, damit die Schallkeulen nicht den jeweils gegenüberliegenden Transponder erreichen. Für eine komplette Abdeckung des Navigationsareals muss die Distanz ausreichend klein gehalten werden, um eine Überlappung der beiden Ultraschallkeulen zu erreichen. Aus dieser Konstellation ergibt sich eine veränderte Fahrstrategie. Im Bereich der Überlappungszone ist in einer festgelegten Entfernung bzw. Kreisbahn vom Startpunkt Transponder A eine 180 Grad Drehung in der Steuerungseinheit für die Fahrwegplanung programmiert. Der einseitig vom Roboter abgestrahlte Ultraschallburst erreicht nach der Drehung nicht mehr Transponder A, sonder den gegenüberliegenden Transponder B. Die neu erkannte Entfernung zum Transponder B definiert einen neuen Sollwert für die Steuereinheit, die daraufhin bei abnehmendem Radius den Roboter veranlasst Kreisbahnen um Transponder B herum zu befahren. In einer programmgemäß festgelegten oder von speziellen Sensoren detektierten Kreisbahn z.B. am Grundstücksende um Transponder B, wird eine in der Steuereinheit geplante Fahrstrategie ausgewählt, die den Roboter bei nun wieder zunehmenden Radius und nachfolgendem wie oben beschriebenen Transponderwechsel im Ultraschallüberlappungsgebiet in seine Startposition zurückgeleitet. Es hat sich als Vorteilhaft erwiesen, den Transponderwechsel im Überlappungsgebiet mit einer Hysterese zu versehen, um im Seitenbereich des Navigationsareals eine Überlappung der zu befahrenden Kreisbahnen für eine durchgehende Abarbeitung der Bodenfläche zu gewährleisten.

Es wird in dieser Ausführung davon ausgegangen, dass der Roboter die Arbeitsbahnen in zwei Richtungen vorwärts und rückwärts befährt. Ist der Roboter als hauptsächlich in nur eine Richtung fahrendes Gerät ausgebildet, also er dreht sich mit jedem Richtungswechsel um 180 Grad, so sind die Schallwandler des Abfragegerätes auf beiden Seiten des Roboters, folglich in Längsrichtung links und recht integriert. Das Abfragegerät aktiviert nur die jeweils der Fahrtrichtung dem jeweiligen Transponder zugewandten Seite entsprechenden Schallwandler für die Aussendung und den Empfang des Ultraschallsignals.

Das erfindungsgemäße Navigationssystem ermöglicht eine einfache vorher festgelegte Zielpunktansteuerung. Das Einrichten einer Basis bzw. Ladestation kann über die Platzierung des Roboters an dem ausgewählten Ort erfolgen, wobei eine Taste an der Steuereinheit zur Abspeicherung des aktuell gemessenen Radius betätigt wird. Weiter ist die Eingabe der Ausrichtung der Einfahrt der Station (gegen oder mit dem Uhrzeigersinn) erforderlich. Noch einfacher und präziser wird die Einrichtung der Ladestation, wenn der Roboter während der Abarbeitung der Bodenfläche, also während der Befahrung der Bahnen auf den Kreisbogenabschnitten an dem Ort gestoppt wird, wo die Andockstation genau vorgesehen ist. Hier werden durch nur einen Tastendruck die Zuordnung und der gemessene Abstand zum jeweiligen Transponder, die Fahrtrichtung, die odometrischen -und die Kompassdaten abgespeichert. Mit diesen Daten erkennt die Steuereinheit des Roboters die zu befahrende Kreisbahn und die Ausrichtung der Ladestation für eine zukünftige zielgenaue Andockung an die Ladekontakte.

In einer weiteren Ausführung steht der Transponder A, der vorteilhafterweise nahe des häuslichen Eingangsbereichs installiert ist, zum Datenaustausch mit einem frequenz- oder amplitudenmodulierten oder digitalcodierten Ultraschallsignal mit dem Roboter in Verbindung. Es kann z.B. über Tasten am Transponder ein Notstopp im Bereich seiner Ultraschallkeule ausgelöst werden, oder der Rückfahrbefehl in die Ladestation initialisiert werden. Es können über einen Tastendruck am Transponder Mithilfe des im Roboter integrierten Kompasses das Aufsuchen einer speziell definierten Region im Garten- initialisiert werden. Umgekehrt- kann der Roboter einen-Notruf aussenden, z.B. bei ungewollten Manipulationen, Diebstahlversuch oder Fehlfunktionen und z.B. einen akustischen Alarm am Transponder auslösen.

Für die Entfernungsmessungen müssen über den Einsatz spezieller Sensoren Korrekturparameter generiert werden, die die gemessenen Werte der Schallgeschwindigkeiten den unterschiedlichen Lufttemperaturen und Luftfeuchtigkeiten anpassen.

Zusätzlich kann das Navigationssystem eine Kalibriereinrichtung zur Bestimmung der Schallgeschwindigkeit aufweisen. Während der Parkposition bzw. während des Ladevorgangs in der Ladestation wird über den bekannten Abstand Transponder und Roboter mittels einer Schall-Laufzeitmessung eine Kalibrierung vorgenommen. Auf diese Weise erfolgt auch eine Überprüfung der exakten Funktion der Schallsender und Empfänger. Stimmen die Schalllaufzeiten nicht mit den abgespeicherten Referenzwerten überein, kann z.B. ein Warnsignal oder eine Startblokade erfolgen.

Bei aufeinander folgenden- Transpondern deren- Ultraschallkeulen einander überlappen ist eine Identifizierung der identischen uncodierten Transponder systembedingt über die Anzahl der erfolgten Transponderwechsel gewährleistet. Es kann auch eine Identifizierung über die abgespeicherten individuell unterschiedlichen Bahneigenschaften der jeweiligen Transponder erfolgen. Bahneigenschaften definieren sich über Grundstücksformen oder Hindernisse vermessen durch Odometrie oder/und der Kompasswerte.

Der Roboter soll nur die Bereiche befahren, in der eine Verbindung über Ultraschall zu mindestens einem Transponder besteht. Bäume, Büsche und dergl. erzeugen jedoch abgeschattete Bereiche, die von der Ultraschallkeule nicht erreicht werden. Diese Bahnabschnitte müssen von der Steuerungseinheit der Fahrwegplanung des Roboters mit Hilfe von Zeitintegration, Odometrie-oder Kompassdaten auf dem vom Radius vorgegebenen Kurs durchfahren werden. Nach Wiedereintritt aus dem Ultraschallschattenbereich in den Signalsendebereich des Transponders wird der programmierte Kurs erneut synchronisiert und der Roboter setzt die Fahrt exakt auf der vorgeplanten Kreisbahn fort. Je höher der Transponder installiert ist, desto weniger kommt es zu Abschattungen hinter z.B. Blumenbeeten, kleinen Büschen und dergl.

Es kann von Vorteil sein, die Transponder in einem definierten Abstand ausserhalb der Begrenzung des Navigationsgebietes zu positionieren, um den Radius und damit die zu befahrenden Kreisbahnabschnitte bereits im Randbereich innerhalb des begrenzten Areals für die geplante Fahrstrategie ausreichen groß zu halten.

Der Stromverbrauch der Transponder ist relativ gering, da sie über einen Sleep-Modus verfügen und nur aktiv sind, wenn sie vom Abfragegerät des Roboters angesprochen werden. So kann die Versorgung über Solarzellen in Kombination mit wiederaufladbaren Batterien erfolgen, wie es bereits bei LED-Solargartenlampen kostengünstig realisiert ist. Alternativ kann eine vorhandene Induktionsschleife wie sie zur Begrenzung des Arbeitsbereiches von Rasenmährobotern zum Einsatz kommt zur Energieversorgung mitgenutzt werden.

In einer weiteren Ausführung ist dem Transponder ein Hilfstransponder zugeordnet. Der Hilfstransponder ermöglicht der Steuereinheit des Roboters eine zweidimensionale Positionsbestimmung. Der Transponder und der Hilfstransponder sind in Sichtkontakt an den Endpunkten der Grundlinie des Navigationsareals so angeordnet, dass die Verbindungslinien mit dem Roboter untereinander ein nach oben ausgebildetes Dreieck erzeugen. Das Abfragegerät des Roboters sendet ein erstes Ultraschallsignal aus, das sich mit Schallgeschwindigkeit ausbreitet. Dieses Signal wird vom Transponder empfangen und als aktives Echo wieder ausgesendet. Dieses Echosignal wird vom Abfragegerät des Roboters und dem Hilfstransponder detektiert. Dieser vom Hilfstransponder empfangene Ultaschallburst wird nach einem definierten Warteintervall als aktives Echo ausgestrahlt und vom Abfragegerät des Roboters empfangen. Aus den Laufzeiten zwischen Roboter - TransponderRoboter und Roboter---Transponder ---Hilfstransponder-Roboter unter Abzug der Laufzeit Transponder-Hilfstransponder und des Warteintervalls ist jeder Bahn des Kreisbogenabschnitts um den zu umfahrenden Transponder ein individueller Abstandswert zum Hilfstransponder zugewiesen und damit einem festen Punkt auf einem gedachten Koordinatensystem zugeordnet. Ein Einfluss der Windgeschwindigkeit auf die Laufzeitmessung wird durch den dreiecksförmigen-Ultraschallweg neutralisiert. Auch bleibt die Richtcharakteristik des Ultraschallsenders des Abfragegerätes bestehen. Sie ist für die erweiterte Navigation mit mehreren Transpondern nötig. Da nur der aktuell umfahrene Transponder und nicht der Hilfstransponder direkt abgefragt wird, können jedem zusätzlich zur Erweiterung des Navigationsareals ausgebrachten Transponder ein Hilfstransponder für die zweidimensionale Positionsbestimmung zur Seite gestellt werden. Es ist lediglich die Richtcharakteristik des Ultraschallwandlers der Roboterabfrageeinheit an den vergrößerten Ultraschallempfangsbereich anzupassen, um die Sendekeulen der räumlich getrennten Transponder und Hilfstransponder gleichzeitig zu erfassen. Da die Transponder und Hüfstransponder im Aufbau identisch- sind und sich lediglich in der Software für das Signalmanagment unterscheiden, können sie mit einer geeigneten Zeitsynchronisation ausgestattet wechselseitig ihre Funktion austauschen, woraufhin der Roboter wellenförmige Bahnen um beide herum befährt.

Mit einem geeigneten Algorithmus lässt sich aus den beiden Abstandsdaten zum Transponder und zum Hilfstransponder ein orthogonales Koordinatensystem erzeugen, um den Roboter auch in geraden Bahnen manövrieren zu lassen.

In einer aufwendigeren Ausführung sind die Transponder, Hilfstransponder und das Abfragegerät des Roboters zur Erweiterung des Navigationsareals mit frequenz- oder amplitudenmodulierten oder digitalcodierten Sendern ausgestattet. Die Schallsignal-Empfänger des Abfragegerätes und der Transponder sind auf die ihnen zugeordneten Sender abgestimmt und befähigen somit die Steuereinheit des Roboters eine eindeutige Identifizierung der ausgebrachte Transponder und eine individuelle Abfrage durchzuführen. Die Schallwandler, Signal-Sender und Empfänger der Transponder und des Abfragegerätes können mit einem vertikal aufgerichteten trichterförmigen Vorsatz ausgestattet sein, der den Transpondern und dem Abfragegerät des Roboters untereinander eine Ultraschallverbindung und damit einen Datenaustausch über einen Winkel von bis zu 360 Grad ermöglicht. In dieser Ausführung können Überlappungsbereiche der von den einzelnen Transpondern ausgehenden gespreizten Ultraschallkeulen eindeutig erkannt und daraufhin der geplanten Fahrstrategie angepasste, individuelle Koppelpunkte zwischen den Transpondern vorgegeben werden.

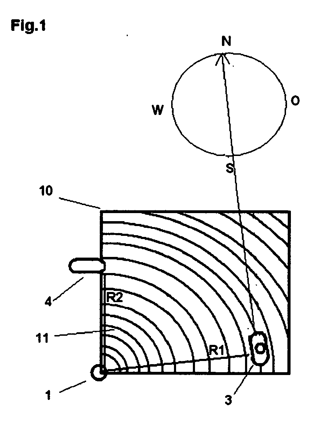

Die Erfindung zeigt im Folgenden anhand der **Fig1** bis **Fig.8** am Beispiel eines Navigationssystems die Fahrwegplanung eines selbstfahrenden Rasenmähroboters in einem heimischen Garten. Die Bahnen sind mit uneinheitlichem Abstand gezeichnet und sollen lediglich die Systematik darstellen. In einem realistischen Maßstab wäre für jede gezeichnete Bahn, je nach Ausführung des Roboters 5- 10 Mähbahnen anzusetzen.

In **Fig.1 i**st eine schematische Grundfläche **10** als Rasenfläche ausgebildet, auf dem das erfindungsgemäße Navigationssystem ein gedachtes kreisförmiges Koordinatensystem aufspannt. Der Roboter **3** steht über Ultraschall für die Abstandsmessungen zur Ermittlung des Radius **R1** mit dem Transponder **1** in Verbindung. Hierdurch synchronisiert befährt der Roboter kreisbogenförmige Mähbahnen **11** um den Transponder **1** herum. Eine Ladestation **4** ist beispielhaft im Randbereich angeordnet, welches über einen programmierten Radius **R2** im Bedarfsfall zielgenau angefahren wird. Durch die permanente tangentiale Ausrichtung des Roboters zum Transponder generiert jeder Kreisbogenabschnitt einen individuellen Kompasswert

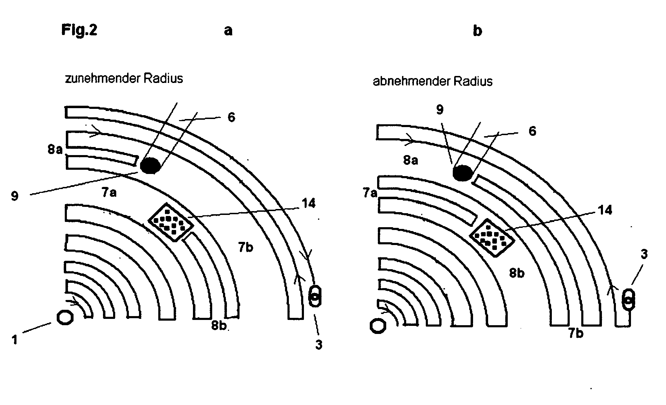

Die **Fig.2a** zeigt das Navigationsprinzip einer systematischen Rasenbearbeitung im Umfeld von detektierten Hindernissen. Der Roboter fährt Kreisbahnen in einem begrenzten Bogenabschnitt mit beim Fahrtrichtungswechsel zunehmendem Radius und erreicht ein von z.B. einer Induktionsschleife geschütztes, oder von im Roboter integrierten Grassensoren detektiertes Blumenbeet **14**. Hier wechselt er die Fahrtrichtung und mäht daraufhin nur die Bahnen dieses Kreisbogenabschnitts **8b** Der Kreisbogenabschnitt mit den Bahnen hinter dem Blumenbeet **7a** bleibt vorerst ungemäht.

Auf seiner weiteren Fahrt behindert ein Baum **9** seine Fahrplanung. Der Roboter wechselt bei weiterhin zunehmendem Radius die Fahrtrichtung und führt sein Fahrprogramm in- diesem Kreisbogenabschnitt **8a** fort. Die Bahnen **7b** auf der gegenüberliegenden Seite des Baumstammes bleiben vorerst ebenfalls ungemäht. Am Zielpunkt bzw. am Rasenende **Fig.2b** wechselt der Roboter die Fahrtrichtung und ein der Bahnbreite entsprechender kleinerer Radius wird als Sollwert vorgegeben, worauf er die vorletzte Mähbahn in gleicher Richtung befährt. Daraus folgt, dass der Roboter bei seinen Kreisbahnfahrten mit abnehmender Distanz zum Transponder die Hindernisse von der gegenüberliegenden bisher ungemähten Seite **7b** und **7a** anfährt. Die bereits gemähten Bahnen **8a** und **8b** werden bei abnehmendem Radius nicht befahren. So ist gewährleistet, dass auf der Rückfahrt zum Transponder bisher ungemähte Rasenabschnitte systematisch abgearbeitet werden, die auf der Hinfahrt nicht erreicht wurden. In der Fortsetzung der Linie Transponder- Baumstamm **9** entsteht ein abgeschatteter Bereich **6,** der von der Ultraschallkeule nicht erreicht wird. Diese Bahnabschnitte müssen von der Steuereinheit der Fahrwegplanung des Roboters mit Hilfe von Zeitintegration, Odometrie und/oder Kompassdaten auf dem vom abgespeicherten Wert des aktuellen Radius vorgegebenen Kurs durchfahren werden. Nach Wiedereintritt aus dem Ultraschallschattenbereich in den Signalsendebereich des Transponders wird der vorprogrammierte Kurs erneut synchronisiert und der Roboter setzt die Fahrt exakt auf der vorgeplanten Mähbahn fort. Ist der Transponder ausreichend hoch installiert, erzeugt das Blumenbeet **14** keine Abschattungen der Ultraschallkeule.

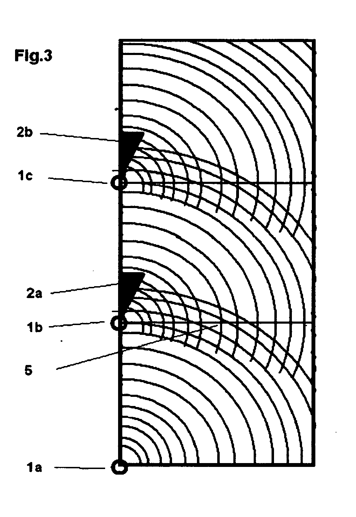

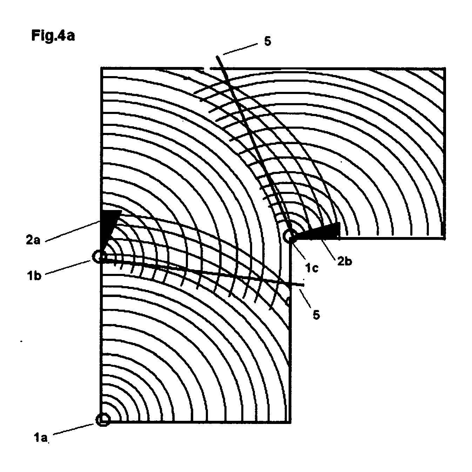

**Fig.3** und **Fig. 4a** zeigt eine erweiterte schematische Grundfläche als Rasenfläche ausgebildet. Das zu- mähende Gebiet wird mit den- Ultraschallkeulen von demjeweiligen vom Roboter angesprochenen Transponder **1a** oder **1b** oder **1c** abgedeckt. Die Ankoppelung an den jeweils folgenden Transponder erfolgt in der verlängerten Verbindungslinie in der von beiden abgedeckten Ultraschallkeule für die Transponderkopplung **2a** bzw.**2b**. Die Größe dieser eingegrenzten Ultraschallkeulen **2a** und **2b** ist durch die Richtcharakteristik der Ultraschallwandler des im Roboter integrierten Abfragegerätes definiert.

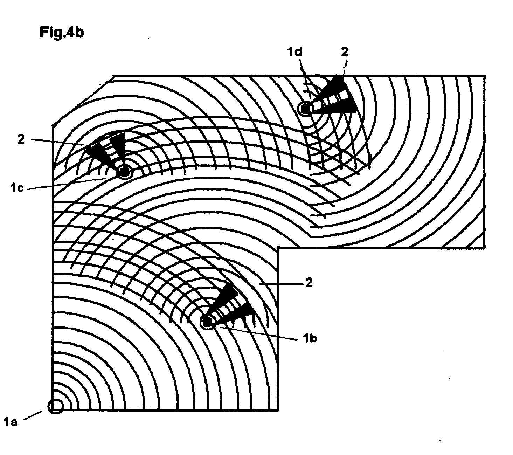

Für eine systematische Abarbeitung und um eine unnötige Mehrfachbefahrung der Rasenfläche zu vermeiden, ist eine Eingrenzung **5** der Ultraschallkeulen durch die oben beschriebenen Einrichtungen an den Schallwandlern der Transponder vorgesehen. Die vom Roboter befahrenen Bahnen überziehen- die Eingrenzungen **5** der Ultraschallkeulen um eine definierte Länge. So kann die Fahrwegplanung des Roboters zwischen abgegrenzten Abschattungen durch Hindernisse, wie Bäume und Büsche oder beabsichtigten Ultraschallausblendungen **5** zur Unterstützung der Fahrstrategie differenzieren. Sind die Hindernisse und die Länge der einzelnen Mähbahnen in der Steuereinheit des Roboters im Vorwege Mithilfe von Hilfstransonder, Kompass- Odometrie- und Radius- Daten abgespeichert, so sind die Einrichtungen am Transponder für die Eingrenzungen **5** nicht erforderlich. Werden Hindernisse wie z.B. Bäume als Basen für die Transponder **1b,1c,1d** genutzt **Fig.4b,** so können die eigenen Abschattungen durch das von diesen Transpondern ausgehende Ultraschallfeld abgedeckt werden. Hierbei spaltet sich die von beiden abgedeckte Ultraschallkeule für die Transponderkopplung **2** in zwei Hälften, was für die planmäßige Umorientierung auf den jeweiligen Folgetransponder keine Auswirkungen hat.

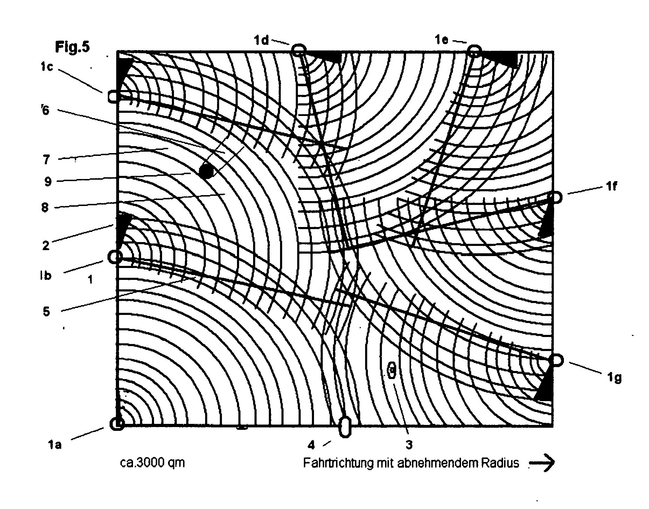

**Fig.5** zeigt eine große- schematische Grundfläche als Rasenfläche ausgebildet. Mit einer Grundfläche von ca. 3000 qm wird das Navigationsgebiet von 7 Transpondern **1a-g** bereitgestellt. Durch die Koppelung der Ultraschallkeulen aneinander decken sie damit das gesamte zu mähende Rasengebiet ab. Der Roboter 3 mäht gegen den Uhrzeigersinn in Kreisbahnabschnitten mit abnehmendem Radius über-die Transponder **1g, f, e, d, c, b,** zum Transponder **1a.** Hier wird die Rückfahrt mit nun- zunehmenden Radius eingeleitet, Der unbefahrene Bereich **7** verursacht durch das Hindernis **9** wird nun, wie in **Fig.2** dargestellt, auf der Rückfahrt bearbeitet. Die vom Hindernis ausgehende Abschattung der Ultraschallkeule **6** von Transponder **1b** wird wie in **Fig.2** beschrieben durchfahren.

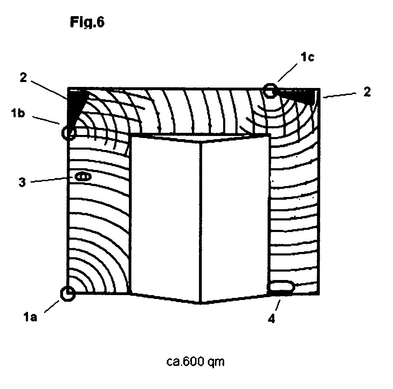

**Fig.6** zeigt ein Grundstück von- ca. 600 qm mit Wohnhaus von einer Rasenfläche dreiseitig umgeben. Die Transponder **1c, 1b** und **1a** leiten den Rasenmähroboter **3** in kurzen Kreisbahnabschnitten mit abnehmenden Radius von der Ladestation **4** um das Gebäude herum und nach erreichen des Transponders **1a** wieder mit zunehmendem Radius in seine Ausgangsstellung zur Ladestation zurück.

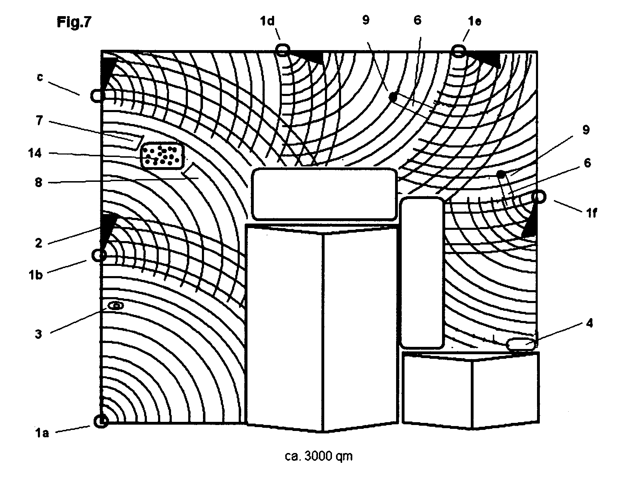

**Fig.7** zeigt ein Grundstück ca. 3000 qm mit Gebäuden und Terrassen mit einem vom Rasen eingeschlossenem Blumenbeet **14**.

Der Mähbahnbereich seitlich des Beetes **7** wird mit zunehmendem Radius, der Bereich **8** mit abnehmendem Radius bearbeitet. Die Abschattungen **9** von Baumstämmen **6** werden wie in **Fig. 2** beschrieben durchfahren.

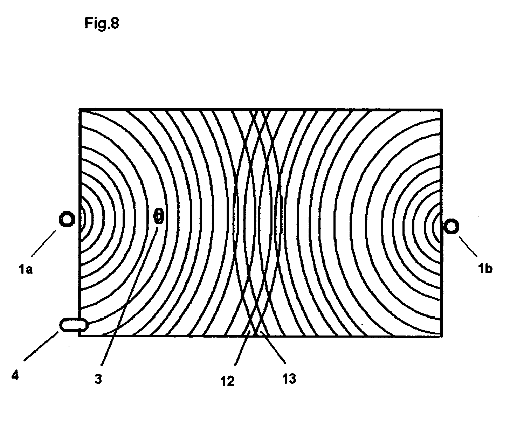

In **Fig. 8** ist ein Navigationssystem mit gegenüberliegenden Transponder **1a** und **1b** dargestellt. Um auch die Seitenbereiche bis zur Transpondergrundlinie abzudecken, weisen die sich in der Mitte überlappenden Ultraschallkeulen am Transponder einen weiten Austrittswinkel von ca. 180 Grad auf. Die Ankopplung des Roboters von Transponder **1a** an Transponder **1b** erfolgt hinter der überfahrenen Mittellinie des Rasens im Bahnbereich **12** indem der Ultraschallsender und Empfänger des Roboters die Ausrichtung um 180 Grad dreht. Die Mähfahrt erfolgt mit abnehmendem Radius weiter auf Kreisbögen bis zum Transponder **1B**. Hier beginnt die Rückfahrt mit abnehmendem Radius bis zum Bahnbereich **13**. Es wird die Ankopplung Transponder **1b** an Transponder **1a** vorgenommen, indem die Ausrichtung der Ultraschallwandler erneut um 180 Grad gedreht werden. Diese kann z.B. durch eine 180 Grad Rotation des Roboters ausgeführt werden oder durch Umschaltung zweier gegensätzlich ausgerichteter Schallwandlereinheiten. Diese Fahrstrategie generiert eine Hysterese um die Mittellinie, wodurch auch die Seitenbereiche des Rasens zuverlässig abgearbeitet werden.

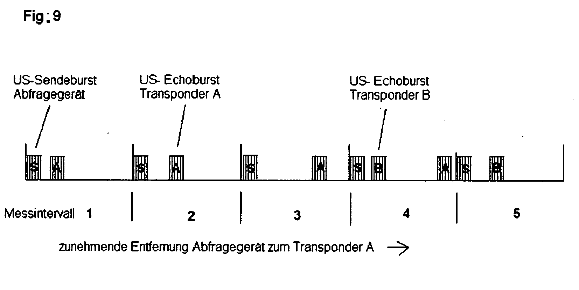

In **Fig. 9** ist ein Diagramm mit 5 Messintervallen dargestellt. Mit **zunehmender Entfernung Abfragegerät zum Transponder A** verschiebt sich der Ultraschallechoburst im Messintervall nach hinten. Bei Eintritt des Roboters in die von der verlängerten Verbindungslinie von **Transponder A** und **Transponder B** abgedeckten Ultraschallkeule erscheint ein zweiter Echoburst im vorderen Bereich des **Messintervall** 4. Dieser zuerst eintreffende Ultraschallechoburst von Transponder **B** legt einen neuen Sollwert fest, mit dem der Roboter Fahrten in Kreisbahnen um **Transponder B** herum einleitet. Im **Messintervall 5** wird **Transponder A** nicht mehr detektiert.

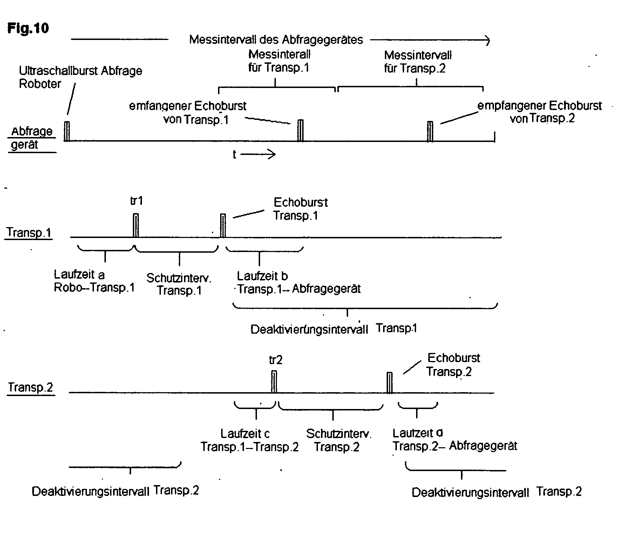

**Fig.10** zeigt Diagramme mit einem **Messintervall des Abfragegerätes** für die zweidimensionale Positionsbestimmung. Das Abfragegerät sendet ein **Ultraschallburst Abfrage Roboter** aus, das sich mit Schallgeschwindigkeit ausbreitet. Dieses Signal wird nach Laufzeit a von Transponder 1 zum Zeitpunkt **tr1** empfangen und als aktives Echo nach dem **Schutzinterv.Transp.1** mit der **Laufzeit** b dem Abfragegerät zurückgesendet. Der **Echoburst Transp.1** wird zusätzlich von einem Hilfstransponder Transp.2 nach der **Laufzeit c** zum Zeitpunkt **tr2** empfangen und nach dem **Schutzinterv. Transp.2** als aktives Echo dem Roboter zugesendet. Die Wartezeit des **Schutzinterv. Transp.2** ist gleich dem des definierten **Messintervall fürTransp.1.** Dieser Wartezeitraum ist vorgesehen, damit sich die beiden Echobursts von Transp.1 und Transp.2 im Empfangsbereich des Roboters nicht überlappen und eine eindeutige Identifizierung erfolgen kann. Auf diese Weise entstehen zwei zeitlich aufeinanderfolgende getrennte **Messintervall für Transp.1** und **Messintervall für Transp.2.** Die zeitliche Länge des **Deaktivierungsinterval Transp. 2** ist so festgelegt, dass der Ultraschallburst Abfrage Roboter für den **Transp. 2** ausgeblendet ist. Die zeitliche Länge des **Deaktivierungsinterval Transp.1** ist so festgelegt, dass der **Echoburst Transp.2** für den **Transp. 1** ausgeblendet ist. Unter Berücksichtigung der Laufzeit von **Transp.1** zu **Transp.2** und dem **Schutzintervall Transp.2** werden die Laufzeiten **Transp. 1.--Abfragegerät** und **Transp.2-Abfragegerät** berechnet. Bei Einsatz codierter Transponder ist kein Deaktivierungsintervall erforderlich, da die verschiedenen Bursts differenziert werden können.

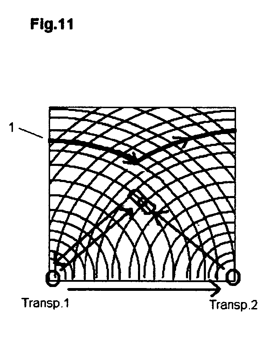

Es wird jedem Kreisbogenabschnitt um **Transp.1** ein Abstandswert zum Hilfstransponder **Transp.2** zugeordnet und damit eine eindeutige Positionsbestimmung ermöglicht **Fig.11.** Um die Ultraschallechosignale beider Transponder in jedem Kreisbogenabschnitt zu empfangen, istdie Abfrageeinheit des Roboters je nach Fahrstrategie mit einer entsprechenden Empfangscharakteristik ausgestattet. Die Charakteristik der Ultraschallsendekeule der Abfrageeinheit bleibt unverändert, da nur ein Transponder abgefragt wird. Es ergibt sich über den **Tranp.2** ein dreiecksförmiger Ultraschalllaufweg.

Wird die Funktion der Transponder **Transp.1** und Hilfstransponder **Transp.2** Mithilfe einer geeigneten Zeitsynchronisation währen der Ausführung des Fahrprogramms, wechselseitig ausgetauscht, so entsteht ein wellenförmiges Fahrbahnmuster **1** um beide Transponder herum.

## Patentansprüche

**1.** Navigationssystem für einen autonomen mobilen Roboter, bestehend aus einem dem Roboter zugeordneten Abfragegerät und mit mindestens einem räumlich getrennten feststehenden Transponder, welches sowohl Ultraschall-Sende als auch Empfangseinheiten aufweist und eine auf dem Ultraschalllaufzeitmessprinzip basierende Abstandmessung durchführt, **gekennzeichnet dadurch, dass** durch die bidirektionale Ultraschalllaufzeitmessung eine nahezu windunabhängige Abstandsmessung durchgeführt wird, die eine Eingangsgröße für die Steuereinheit des Roboters bildet und durch die Abstandsbestimmung zu dem jeweils einen Transponder systematisch Bodenflächen befährt und im Bereich weiterer ausgebrachter Transponder eine autonome akustische Ankopplung des Roboters an diese erfolgt.

**2.** Navigationssystem nach Anspruch 1, **dadurch gekennzeichnet, dass** der Roboter durch zunehmende oder abnehmende Radien definierte Kreisbogenabschnitte um den Transponder herum befährt.

3. Navigationssystem nach Anspruch 1, **dadurch gekennzeichnet, dass** im Bereich einer Mehrzahl ausgebrachter identischer uncodierter Transponder eine autonome akustische Ankopplung des Roboters an diese erfolgt.

4. Navigationssystem nach Anspruch 1 und 3 , **dadurch gekennzeichnet, dass** eine Auswahl des jeweiligen Transponders über die Reihenfolge der eintreffenden Ultraschallechobursts innerhalb eines definierten Messintervalls erfolgt.

5. Navigationssystem nach Anspruch 1, **dadurch gekennzeichnet, dass** der Roboter detektierte Hindernisse bei zunehmendem Radius linksseitig und bei abnehmendem Radius rechtsseitig oder diesbezüglich invers befährt und so eine einheitliche Abarbeitung der Bodenfläche gewährleistet.

6. Navigationssystem nach Anspruch 1, **dadurch gekennzeichnet, dass** der Roboter zu seiner Lagebestimmung einen elektronischen Kompass aufweist.

7. Navigationssystem nach Anspruch 1 und 6, **dadurch gekennzeichnet, dass** der im Roboter integrierte Kompass durch- die permanente tangentiale Ausrichtung zum Transponder für jeden Kreisbogenabschnitt einen Wert generiert, der eine Positionsbestimmung unter Einbeziehung der Werte des Radius ermöglicht.

8. Navigationssystem nach Anspruch 1, **dadurch gekennzeichnet, dass** der mobile Roboter ein Bodenbearbeitungsgerät ist, vorzugsweise ein Rasenmähroboter oder ein Roboter zum- Ausbringen von Düngemittel.

9. Navigationssystem nach Anspruch 1, **dadurch gekennzeichnet, dass** während der Parkposition bzw. während des Ladevorgangs über den bekannten Abstand Transponder und R-oboter mittels einer Schall-Laufzeitmessung eine Kalibrierung vorgenommen wird.

10. Navigationssystem nach Anspruch 1, **dadurch gekennzeichnet, dass** Empfänger und Sender durch ein einziges Bauteil repräsentiert sind.

11. Navigationssystem nach Anspruch 1, **dadurch gekennzeichnet, dass** der Roboter mit mindestens einem Transponder zum Datenaustausch mit einem frequenz- oder amplitudenmodulierten oder digitalcodierten Ultraschallsignal in Verbindung steht.

12. Navigationssystem nach Anspruch 1 und 11, **dadurch gekennzeichnet, dass** über den Datenaustausch Statussignale vom Roboter zum Transponder oder umgekehrt Missionsdaten übertragen werden.

13. Navigationssystem nach Anspruch 1, **dadurch gekennzeichnet, dass** für die Festlegung des Standorts der Ladestation die Abspeicherung der erforderlichen Parameterwerte wie die Zuordnung und der gemessene Abstand zum jeweiligen Transponder, die Fahrtrichtung, die odometrischen -und die Kompassdaten durch nur einen Tastendruck an der Steuereinheit des Roboters erfolgt und damit ein zukünftiges zielgenaues Andocken an die Ladekontakte gewährleistet ist.

14. Navigationssystem nach Anspruch 1, **dadurch gekennzeichnet, dass** durch die Fahrstrategie die aktivierten Ultraschallwandler für Sender und Empfänger des dem
Roboter zugeordneten Abfragegeräts immer in Richtung des jeweils angesprochenen Transponders gerichtet sind.

15. Navigationssystem nach Anspruch 1, **dadurch gekennzeichnet, dass** der Roboter in unbegrenztem Navigationsareal 360° Kreisbahnen bzw.spiralförmige Bahnen um den Transponder befährt.

16. Navigationssystem nach Anspruch 1, **dadurch gekennzeichnet, dass** der Roboter Kreisbogenabschnitte um den Transponder befährt, die durch Hindernisse oder Grundstücksgrenzen detektierbar mittels z.B. Induktionsschleifen, Grassensoren oder Kollisionssensoren beschränkt sind.

17. Navigationssystem nach Anspruch 1, **dadurch gekennzeichnet, dass** der Roboter Kreisbogenabschnitte um den Transponder befährt, die durch die von der Ultraschallsignalkeule abgedeckten Bodenfläche definiert ist.

18. Navigationssystem nach Anspruch 1, **dadurch gekennzeichnet, dass** die Form der Ultraschallsignalkeule der Transponder wie des Abfragegerätes durch die Richtcharakteristik der Ultraschallwandler festgelegt ist

19. Navigationssystem nach Anspruch 1 und 18, **dadurch gekennzeichnet ,dass** die Richtcharakteristik durch eine Vielzahl unterschiedlich ausgerichteter Ultraschallkapseln, spezieller Ultraschallwandler, Schallblenden, Schalltrichter oder Schalllinsen definiert ist.

20. Navigationssystem nach Anspruch 1, **dadurch gekennzeichnet, dass** zwei identische Transponder auf sich gegenüberliegenden Grundstücksbegrenzungen ausgebracht sind, wobei ihre Ultraschallsendekeulen aufeinander gerichtet sind und in ihrem Überlappungsbereich unter Generierung einer Hysterese zur Sicherstellung einer Kreisbahnüberlappung eine Umorientierung des Roboters von dem ersten auf den zweiten Transponder erfolgt.

21. Navigationssystem nach Anspruch 1, **dadurch gekennzeichnet, dass** die unterschiedlichen Schallgeschwindigkeiten verursacht durch Luftfeuchtigkeit- und Lufttemperaturschwankungen durch spezielle Sensoren kompensiert werden.

22. Navigationssystem nach Anspruch 1, **dadurch gekennzeichnet, dass** der mindestens eine Transponder in einem definierten Abstand ausserhalb der Begrenzung des Navigationsgebietes positioniert ist, um den- Radius und damit die zu befahrenden Kreisbahnabschnitte bereits im Randbereich innerhalb des begrenzten Areals für die geplante Fahrstrategie ausreichen groß zu halten.

23. Navigationssystem nach Anspruch 1, **dadurch gekennzeichnet, dass** die Änderungen der Sollwerte für die Generierung der Kreisbahnen- durch zu- oder abnehmende Radien während des Fahrtrichtungswechsels erfolgen.

24. Navigationssystem nach Anspruch 1, **dadurch gekennzeichnet, dass** Solarzellen in Kombination mit wiederaufladbaren Batterien oder bestehende Induktionsschleifen für die Energieversorgung genutzt werden.

25. Navigationssystem nach Anspruch 1, **dadurch gekennzeichnet, dass** Mithilfe eines Transponders und eines Hilfstransponders zwei Laufzeitmessungen für eine zweidimensionale Positionsbestimmung durchgeführt werden.

26. Navigationssystem nach Anspruch 1 und 25, **dadurch gekennzeichnet, dass** die Grundlage der zweidimensionalen Positionsberechnungen aus den beiden Laufzeitmessungen der Wegstrecke

    1. Roboter-Transponder-Roboter
    2. Roboter-Transponder-Hilfstransponder-Roboter

besteht.

27. Navigationssystem nach Anspruch 1 und 25, **dadurch gekennzeichnet, dass** jedem zusätzlich zur Erweiterung des Navigationsareals ausgebrachten Transponder ein Hilfstransponder für die zweidimensionale Positionsbestimmung zugeordnet werden kann.

28. Navigationssystem nach Anspruch 1 und 25, **dadurch gekennzeichnet, dass** der Transponder und der Hilfstransponder ihre Funktion Mithilfe einer geeigneten Zeitsynchronisation währen der Ausführung des Fahrprogramms wechselseitig austauschen, sodass ein wellenförmiges Fahrbahnmuster um beide Transponder herum entsteht.

29. Navigationssystem nach Anspruch 1 und 25, **dadurch gekennzeichnet, dass** mit Mithilfe eines geeigneten Algorithmus sich aus den beiden Abstandsdaten zum Transponder und zum Hilfstransponder ein orthogonales Koordinatensystem erzeugen lässt, was den- Roboter befähigt auch in geraden Bahnen zu manövrieren.

30. Navigationssystem nach Anspruch 1, **dadurch gekennzeichnet, dass** für eine erweiterte Nutzung ausgebrachte frequenz- oder amplitudenmodulierte oder codierte Transponder dem darauf abgestimmten Abfragegerät des Roboters eine eindeutige Identifizierung und eine individuelle Abfrage der Transponder ermöglicht.

31. Navigationssystem nach Anspruch 1 und 30, **dadurch gekennzeichnet, dass** die Schallwandler der Transponder und des Abfragegerätes des Roboters vertikal aufgerichtete trichterförmige Vorsätze aufweisen, die untereinander Ultraschallverbindungen und damit einen Datenaustausch über einen Winkel von bis zu 360 Grad ermöglichen.

Fig.1

**Fig.2**  a  b

zunehmender Radius

8a

9

7a

6

14

7b

8b

1

3

abnehmender Radius

9

8a

7a

6

14

8b

3

7b

Fig.3

**Fig.4a**

**Fig.4b**

**Fig.5**

1c 6 7 9 8 2 1b 1 5 1a

1d 1e 1f 1g

4 3

ca.3000 qm    Fahrtrichtung mit abnehmendem Radius ⟶

**Fig.6**

ca.600 qm

**Fig.7**

ca. 3000 qm

Fig.8

**Fig: 9**

US-Sendeburst
Abfragegerät

US- Echoburst
Transponder A

US- Echoburst
Transponder B

Messintervall  1    2    3    4    5

zunehmende Entfernung Abfragegerät zum Transponder A  $\longrightarrow$

**Fig.10**

Messintervall des Abfragegerätes ⟶

Ultraschallburst Abfrage Roboter

Messinterall für Transp.1     Messintervall für Transp.2

emfangener Echoburst von Transp.1

empfangener Echoburst von Transp.2

Abfrage gerät

t ⟶

tr1

Echoburst Transp.1

Transp.1

Laufzeit a Robo–Transp.1     Schutzinterv. Transp.1     Laufzeit b ·Transp.1– Abfragegerät

Deaktivierungsintervall  Transp.1

tr2

Echoburst Transp.2

Transp.2

Laufzeit c Transp.1–Transp.2     Schutzinterv. Transp.2     Laufzeit d Transp.2– Abfragegerät

Deaktivierungsintervall Transp.2

Deaktivierungsintervall  Transp.2

**Fig.11**

Transp.1    Transp.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 753160 A1
- DE 102004014281 A1
- EP 085879 A2
- EP 0485879 A2
- US 4751689 A
- FR 2692363 FR
- US 4313183 A
- US 20030142587 A
- DE 3442686 C2